# EUROPÄISCHE PATENTSCHRIFT

(11) **EP 0 553 224 B1**
(45) Veröffentlichungstag und Bekanntmachung des Hinweises auf die Patenterteilung: **21.12.1994**
(21) Anmeldenummer: 91919254.2
(22) Anmeldetag: 17.10.1991
(51) Int. Cl.: F16K 1/34

(54) **HOCHDRUCK-VENTIL**
HIGH-PRESSURE VALVE
SOUPAPE A HAUTE PRESSION

(30) Priorität: 18.10.1990 AT 2101/90
(43) Veröffentlichungstag der Anmeldung: 04.08.1993
(73) Patentinhaber: Weber, Günter, A-2474 Gattendorf (AT)
(72) Erfinder: Weber, Günter, A-2474 Gattendorf (AT)
(74) Vertreter: Holzer, Walter, Dipl.-Ing.
(86) Internationale Anmeldenummer: AT9100112
(87) Internationale Veröffentlichungsnummer: WO9207208

(56) Entgegenhaltungen:
- DE-B- 1 190 756
- FR-A- 576 317
- FR-A- 2 414 671

## Beschreibung

Die Erfindung betrifft ein Hochdruckventil, mit einem in einem Ventilgehäuse von einer Ventilspindel mitgeführten Ventilkegel, der in der Schließstellung an einer einen Ventilsitz bildenden Ringkante aus Hartmetall, insbesondere Stahl, anliegt.

Derartige Ventile nützen die plastische Verformung aus, welcher die weiche Dichtfläche bei ihrem Zusammentreffen mit dem Hartmetallsitz unterworfen ist, um eine gleichbleibende Dichtheit des Ventiles über längere Zeit zu gewährleisten. Ein solches Ventil wird beispielsweise in der DE-A-1 190 756 beschrieben. Bei den bekannten Ventilen besteht der Ventilkegel aus Kupfer oder oberflächenverkupfertem oder -vergoldetem Stahl und ist an einer herkömmlichen Ventilspindel, z.B. aus Stahl, montiert. Dieser Aufbau erfordert die gesonderten Fertigungsschritte der Montage und allfälligen Beschichtung des Ventilkegels.

Weiters besitzen Stahlspindeln und -ventilkegel eine hohe Massenträgheit, was bei periodischem Schaltbetrieb des Ventiles zu einem dynamischen Druckverlust in der Größenordnung von etwa 4 - 5 bar führt. Schließlich sind diese Kegel/Spindelausbildungen bei Betätigung des Ventils mittels eines Elektromagneten ungeeignet, weil sie der Gefahr einer Magnetisierung ausgesetzt sind.

Die Erfindung setzt sich daher zum Ziel, ein Hochdruckventil mit dem eingangs geschilderten Aufbau zu schaffen, das extrem dicht ist, eine geringe dynamische Massenträgheit im Schaltvorgang aufweist und bei dem die Spindel und der Ventilkegel auf einfache Weise montierbar und mittels eines Elektromagneten betätigbar sind. Dieses Ziel wird gemäß der Erfindung dadurch erreicht, daß der Ventilkegel, die Dichtfläche und die Ventilspindel einstückig aus Aluminium gefertigt sind und das Ventil ein druckkompensiertes Hochdruck-Steuerventil ist. Erfindungsgemäß wird die dynamische Masse der Ventilspindel/Ventilkegel-Anordnung und damit - bei einem periodisch geschalteten Steuerventil - der dynamische Druckverlust verringert. Ferner wird die Herstellung des Ventiles auf Grund der einstückigen Ausbildung von Ventilkegel, Dichtfläche und Ventilspindel vereinfacht. Überdies ergibt sich auf Grund der nicht-magnetischen Eigenschaft des Aluminiums der weitere Vorteil, daß eine Magnetisierung der Kegel/Spindel-Anordnung durch einen zur Betätigung der Spindel erforderlichen Elektromagneten ausgeschlossen wird. Diese Magnetisierung tritt bei bekannten Stahlspindel-Ventilen auf und führt zu zusätzlichen dynamischen Druckverlusten auf Grund der Anziehungskräfte der magnetisierten Teile und zu störenden, nicht restlos geklärten Spindeleigenbewegungen.

Bei der erfindungsgemäßen druckkompensierten Ventilanordnung wird die Aluminium-Dichtfläche nicht mit dem vollen Betriebsdruck gegen die Stahl-Ringkante gepreßt, sondern der Anpreßdruck wird nur durch die auf die Spindel ausgeübte Steuerkraft bewirkt. Es ist ersichtlich, daß in diesem Fall ein Langzeitverschleiß der Weichmetall-Dichtfläche so gut wie ausgeschlossen ist.

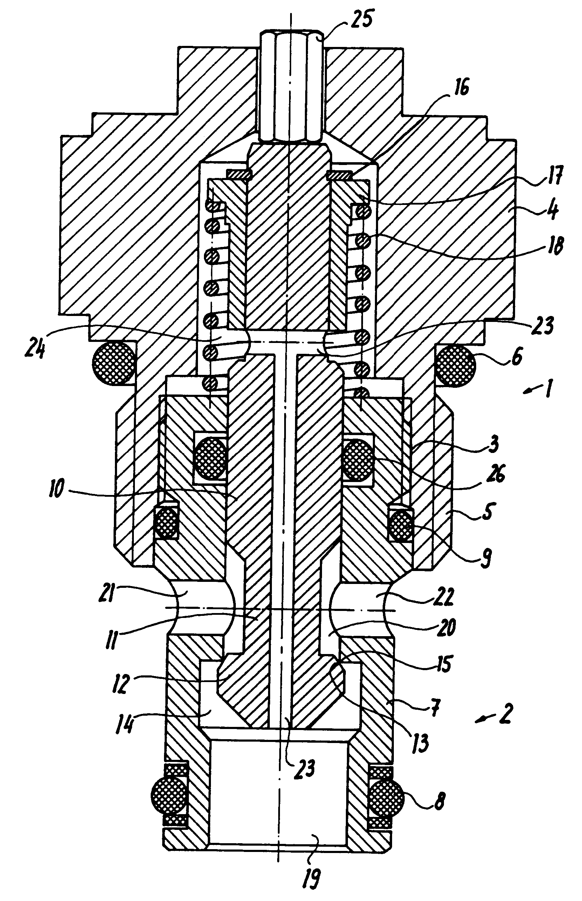

Die Erfindung wird nun an Hand eines Ausführungsbeispieles unter Bezugnahme auf die Zeichnung näher erläutert, die ein mit der erfindungsgemäßen Dichtungsanordnung ausgestattetes 2/2-Wege-Ventil im Längsschnitt zeigt.

Das Ventil weist ein zweiteiliges Ventilgehäuse 1, 2 auf, dessen Oberteil 1 bei 3 auf den Unterteil 2 geschraubt ist. Der Oberteil 1 weist an seinem oberen Ende einen Endflansch 4 und an seinem unteren Ende ein Außengewinde 5 mit standardisierten Außenabmessungen auf, so daß der obere Teil 1 mitsamt dem eingeschraubten Unterteil 2 in eine standardisierte Gewindebohrung zur Aufnahme von Ventilen einschraubbar ist. Eine Flanschdichtung 6 gewährleistet dabei einen dichten Sitz des Ventiles in dieser (nicht dargestellten) Gewindebohrung. Ventile mit diesem Gehäuseaufbau werden auch Einschraub-Patronenventile (Cartridge-Ventile) genannt.

Der Gehäuseunterteil 2 hat geringeren Außendurchmesser als der Gehäuseoberteil 1 und bildet daher im eingeschraubten Zustand einen unteren Ventilabschnitt 7 verringerten Außendurchmessers, an dessen unterem Ende ein in einer Umfangsnut verlaufender O-Ring 8 angeordnet ist. Dieser O-Ring 8 dient zur umfangsseitigen Abdichtung des unteren Abschnittes 7 in einem Bohrungsabschnitt verringerten Durchmessers der (nicht dargestellten) Gewindebohrung, welche das Ventil aufnimmt.

Die Verbindungsstelle der Gehäuseteile 1, 2 ist durch einen weiteren O-Ring 9 abgedichtet.

Die Gehäuseteile 1, 2 sind von einer zentralen, mehrfach abgesetzten Bohrung durchsetzt, in der eine Ventilspindel 10 axial verschiebbar geführt ist. Die Spindel 10 weist an ihrem unteren Ende einen Abschnitt 11 verringerten Durchmessers auf, der in einen Spindelkopf 12 mit erweitertem Durchmesser mündet. Die an den Abschnitt 11 grenzende obere Kante des Spindelkopfes 12 ist abgeschrägt, so daß sie eine kegelstumpfförmige Fläche 13 bildet, die dem Spindelkopf 12 die Funktion eines Ventilkegels verleiht. Dieser Spindelkopf bzw. Ventilkegel 12 bewegt sich in einem Abschnitt 14 erweiterten Innendurchmessers des Gehäuseunterteiles 2 und liegt in der Schließstellung des Ventiles mit der als Dichtfläche dienenden kegelstumpfförmigen Fläche 13 an einer Ringkante 15 an. Diese Ringkante 15 wird durch den Übergang vom erweiterten Bohrungsabschnitt 14, in dem sich der Ventilkegel 12 bewegt, zum axialen Bohrungsabschnitt gebildet, in dem sich die Ventilspindel 10 bewegt.

Die Ventilspindel 10 weist an ihrem oberen Ende einen durch einen Klemmring 16 festgelegten Flansch 17 auf, der eine Feder 18 festlegt, deren anderes Ende an der oberen Stirnseite des Gehäuseunterteiles 2 abgestützt ist. Auf diese Weise wird die Ventilspindel 10 in Richtung nach oben vorgespannt, so daß die Dichtfläche 13 des Ventilkegels 12 gegen die Ringkante 15 des Gehäuseunterteiles 2 gepreßt wird. Der ringförmige Ventilspalt zwischen Dichtfläche 13 und Ringkante 15 ist daher in der gezeigten Ruhestellung geschlossen.

Der Bohrungs-Druckraum 19 unterhalb des Ventilkegels 12 stellt den einen Druckanschluß des Ventiles dar, und der Ringraum 20, der oberhalb des Ventilspaltes im Bereich des Spindelabschnittes 11 verringerten Durchmessers gebildet wird, ist mit zwei einander gegenüberliegenden radialen Bohrungen 21, 22 versehen, welche die anderen Druckanschlüsse des Ventiles darstellen. Der im Ringraum 20 herrschende Druck wirkt gleichzeitig auf die obere und die untere Flankenfläche des Spindelabschnittes 11 und wird dadurch in seiner Wirkung auf die Spindel 10 kompensiert.

Der eine Druckraum 19 steht über eine den Ventilkegel 12 und die Ventilspindel 10 durchsetzende Bohrung 23 mit einem Gegendruckraum 24 in Verbindung. Dieser Gegendruckraum 24 wird durch einen Bohrungsabschnitt vergrößerten Durchmessers im Gehäuseoberteil 1 gebildet und nimmt das gesamte obere Ende der Ventilspindel 10 samt der Vorspanneinrichtung 16 - 18 auf. Auf diese Weise wird der an dem einen Ventilanschluß 19 herrschende Druck auf beide Seiten der Ventilspindel geleitet und kompensiert.

Durch die Druckkompensation der Anschlüsse 19, 21, 22 wirkt bei Druckbeaufschlagung des Ventiles in jeder Durchströmungsrichtung keine axiale Kraft auf die Spindel. Die Ventilverschlußkraft wird daher nur durch die Federkraft der Vorspannfeder 18 aufgebracht.

Zur Betätigung der Ventilspindel ist im oberen Gehäuseteil 1 ein Bolzen 25 geführt, der auf die obere Stirnfläche der Spindel 10 wirkt. Die Betätigung des Bolzens 25 kann z.B. durch einen nicht dargestellten Elektromagneten erfolgen.

Zur Abdichtung der Ventilausgangsanschlüsse 21, 22 gegenüber den Druckräumen 19, 24 ist eine Gleitringdichtung 26 vorgesehen, die im unteren Gehäuseteil 2 im Bereich zwischen den Ausgangsanschlüssen 21 und 22 und dem Gegendruckraum 24 die Spindel 10 abdichtend umschließt.

Dieser Aufbau entspricht dem herkömmlicher druckkompensierter 2/2-Wege-Ventile, die als Einschraubventilpatronen mit standardisierten Außenabmessungen erhältlich sind.

Erfindungsgemäß ist die gesamte Anordnung aus Ventilspindel 10, Ventilkegel 12 und Dichtfläche 13 aus Aluminium gefertigt. Die Dichtfläche 13 ist feingedreht.

Im Dichtspalt liegen sich eine Aluminium-Dichtfläche 13 und eine Stahl-Ringkante 15 gegenüber. Bei den ersten Ventilschaltvorgängen prägt sich die Ringkante 15 geringfügig in die Dichtfläche 13 ein und schafft eine ausgezeichnete Abdichtung. Selbst bei lang anhaltendem Betrieb und oftmaligen Schaltvorgängen verformt sich das Aluminium nicht weiter, so daß die ausgezeichnete Abdichtung über lange Zeit erhalten bleibt.

Bei einer entwickelten Ausführungsform konnte bei einem Betriebsdruck von 200 bar ein maximaler Druckverlust von 4 bar/24 h festgestellt werden. Nach einem Langzeitbetrieb mit 200.000 Schaltvorgängen war immer noch der gleiche Druckverlust von 4 bar/24 h feststellbar.

Als Ausgangsmaterial für die Ventilspindel 10 und für den Ventilkegel 12 wurde Aluminium mit einer Zugfestigkeit von 340 N/mm² verwendet. Dieses Material weist im Vergleich zu Stahl eine wesentlich geringere spezifische Masse und damit eine wesentlich geringere Trägheit auf. Der dynamische Druckverlust bei periodischem Schalten des Ventiles wird daher auf etwa 1 - 2 bar reduziert. Es ist hinzuzufügen, daß Aluminium auf Grund seiner nicht-magnetischen Eigenschaft durch einen zur Betätigung der Spindel benötigten Elektromagneten nicht magnetisiert wird, wodurch bisher während des Ventilschaltens bei Stahlspindeln auftretende, nicht restlos beschreibbare Störeffekte ausgeschlossen werden.

Weiters ist erkennbar, daß bei dem dargestellten Ausführungsbeispiel die Ventilspindel 10 nach Entfernen des Klemmringes 16 nach unten entfernbar und austauschbar ist. Bei bisher verwendeten Stahl-Ventilkegeln mit Stahl-Dichtflächen war dies nicht möglich, da dort der Ventilsitz durch Einschlagen des Ventilkegels 12 in den Ringkanten-Ventilsitz 15 optimiert wurde, wodurch die Dichtfläche 13 aus gehärtetem Stahl die Ringkante 15 nach innen umbördelte, was ein Entfernen der Ventilspindel unmöglich machte.

Es versteht sich, daß die Erfindung nicht auf die Anwendung bei dem dargestellten 2/2-Wege-Einschraubventil-Typ beschränkt ist, sondern bei allen Ventiltypen einsetzbar ist, bei denen ein Ventilkegel in der Schließstellung an einer einen Ventilsitz bildenden Ringkante anliegt.

## Patentansprüche

1. Hochdruckventil, mit einem in einem Ventilgehäuse (1, 2) von einer Ventilspindel (10) mitgeführten Ventilkegel (12), der in der Schließstellung an einer einen Ventilsitz bildenden Ringkante (15) aus Hartmetall, insbesondere Stahl, anliegt, dadurch gekennzeichnet, daß der Ventilkegel (12), die Dichtfläche (13) und die Ventilspindel (10) einstückig aus Aluminium gefertigt sind und das Ventil ein druckkompensiertes Hochdruck-Steuerventil ist.

## Claims

1. High-pressure valve comprising a valve cone (12) carried by a valve spindle (10) in a valve casing (1, 2), said valve cone abutting in the closed position against an annular edge (15) forming a valve seat, said annular edge being made of hard metal, in particular steel, characterised in that said valve cone (12), its sealing surface (13), and the valve spindle (10) consist of a single piece of aluminum and the valve is a pressure compensated high-pressure control valve.

## Revendications

1. Soupape à haute pression comprenant un cône de soupape (12) porté par une tige de soupape (10) dans une cage de soupape (1, 2), ledit cône de soupape portant bien, dans la position de fermeture, sur une arête annulaire (15) du métal dur, en particulier d'acier, formant une siège de soupape, characterisée en ce que le cône de soupape (12), sa surface d'étanchéité (13) et la tige de soupape (10) consistent d'une pièce de l'aluminium et en ce que la soupape est une soupape à haute pression, de contrôle, et compensée en pression.
